# EUROPEAN PATENT APPLICATION

(11) **EP 2 528 372 A1**
(43) Date of publication of application: **28.11.2012**
(21) Application number: 11734678.3
(22) Date of filing: 19.01.2011
(51) Int. Cl.: H04W 16/32, H04W 48/10, H04W 48/18, H04W 84/10

(54) **MOBILE COMMUNICATION SYSTEM, RADIO BASE STATION FOR PARTICULAR CELL, AND MOBILE COMMUNICATION METHOD**

(30) Priority: 19.01.2010 JP 2010009534
(71) Applicant: NTT DoCoMo, Inc., Tokyo 100-6150 (JP)
(72) Inventor: HOSONO, Hiroyuki, Tokyo 100-6150 (JP); SATO, Takaaki, Tokyo 100-6150 (JP); TERAYAMA, Takeshi, Tokyo 100-6150 (JP); OKAMOTO, Takeshi, Tokyo 100-6150 (JP)
(74) Representative: HOFFMANN EITLE
(86) International application number: PCT/JP2011/050871
(87) International publication number: WO 2011/090072

(57) **Abstract**

A mobile communication system 100 includes a radio base station 20 for a specific cell configured to manage a specific cell to which any one of a plurality of frequencies allocated to a public cell is allocated. The radio base station 20 for a specific cell notifies guidance notification leading cell reselection from the public cell to the specific cell by using the remaining frequencies other than the frequency allocated to the specific cell.

## Description

### TECHNICAL FIELD

The present invention relates to a mobile communication system having a specific cell to which any one of multiple frequencies allocated to a public cell is allocated, a radio base station for a specific cell, which is used in the mobile communication system, and a mobile communication method.

### BACKGROUND ART

There has been known a specific cell referred to as a CSG (Closed Subscriber Group) cell, a home cell, a femtocell or the like. Note that an access type is settable in the specific cell. The access type is "Closed," "Hybrid," or "Open".

The "Closed" specific cell is configured to permit only a specific user (UE; User Equipment) to receive provision of services. The "Hybrid" specific cell is configured to permit a specific user to perform communications with a higher quality than other users (non-specific users). The "Open" specific cell is configured to permit all the users to receive provision of services, as is the case with a general public cell.

Here, in order to allow a mobile communication terminal to use a specific cell, it is necessary to guide the mobile communication terminal from a public cell to the specific cell. To guide the mobile communication terminal from the public cell to the specific cell, a network side has to acquire the location of the mobile communication terminal.

As a method for the network side to acquire the location of a mobile communication terminal, there has been proposed a technique to estimate the location of a mobile communication terminal based on the location of a radio base station for a public cell, in which the identifier of the mobile communication terminal is received from the mobile communication terminal (e.g., PATENT DOCUMENT 1).

### PRIOR ART DOCUMENT

### PATENT DOCUMENT

PATENT DOCUMENT 1: Japanese Patent Application Publication No. 2003-67553

### SUMMARY OF THE INVENTION

However, the service area of a public cell is not the same with the service area of a specific cell. Thus, even though the location of a mobile communication terminal is estimated based on the location of a radio base station for a public cell, there is a possibility in practice that the mobile communication terminal may be guided from the public cell to the specific cell although the specific cell is unusable.

Also, it is possible to accurately acquire the location of a mobile communication terminal by using a GPS (Global Positioning System) function provided in the mobile communication terminal. However, there also exist mobile communication terminals without the GPS function.

For this reason, the present invention has been made with a view to solving the above problem. Accordingly, an objective of the present invention is to provide a mobile communication system, a radio base station for a specific cell, and a mobile communication method, which are capable of guiding a mobile communication terminal from a public cell to a specific cell properly without acquiring the location of the mobile communication terminal.

A mobile communication system according to the first feature includes a radio base station for a specific cell configured to manage a specific cell to which any one of a plurality of frequencies allocated to a public cell is allocated. The radio base station for a specific cell notifies guidance notification leading cell reselection from the public cell to the specific cell by using the remaining frequencies other than the frequency allocated to the specific cell.

In the first feature, the radio base station for a specific cell may switch the remaining frequencies in a time division manner to notify the guidance notification by using each of the remaining frequencies in the time division manner.

In the first feature, the guidance notification may contain information specifying the frequency allocated to the specific cell.

In the first feature, the guidance notification may contain information restricting usage of a frequency used for notifying the guidance notification.

A radio base station for a specific cell according to the second feature is configured to manage a specific cell to which any one of a plurality of frequencies allocated to a public cell is allocated. The radio base station includes a notification unit configured to notify guidance notification leading cell reselection from the public cell to the specific cell by using the remaining frequencies other than the frequency allocated to the specific cell.

A mobile communication method according to the third feature is applied to a mobile communication system having a radio base station for a specific cell configured to manage a specific cell to which any one of a plurality of frequencies allocated to a public cell is allocated. The mobile communication method comprising the step of : notifying guidance notification by the radio base station for a specific cell, the guidance notification leading cell reselection from the public cell to the specific cell by using the remaining frequencies other than the frequency allocated to the specific cell.

### BRIEF DESCRIPTION OF DRAWINGS

[Fig. 1] Fig. 1 is a drawing showing a mobile communication system 100 according to a first embodiment.
[Fig. 2] Fig. 2 is a drawing showing a radio base station 20 for a specific cell according to the first embodiment.
[Fig. 3] Fig. 3 is a drawing for illustrating a first guidance method according to the first embodiment.
[Fig. 4] Fig. 4 is a drawing for illustrating the first guidance method according to the first embodiment.
[Fig. 5] Fig. 5 is a drawing for illustrating the first guidance method according to the first embodiment.
[Fig. 6] Fig. 6 is a drawing for illustrating the first guidance method according to the first embodiment.
[Fig. 7] Fig. 7 is a drawing for illustrating a second guidance method according to the first embodiment.
[Fig. 8] Fig. 8 is a drawing for illustrating the second guidance method according to the first embodiment.
[Fig. 9] Fig. 9 is a drawing for illustrating the second guidance method according to the first embodiment.
[Fig. 10] Fig. 10 is a drawing showing a mobile communication system 100 according to Modification 1.

### MODE FOR CARRYING OUT THE INVENTION

A mobile communication system according to an embodiment of the present invention is described below by referring to the drawings. In the following description of the drawings, same or similar reference numerals are given to denote same or similar portions.

Note that the drawings are merely schematically shown and proportions of sizes and the like are different from actual ones. Thus, specific sizes and the like should be judged by referring to the description below. In addition, there are of course included portions where relationships or percentages of sizes of the drawings are different with respect to one another.

### [Summary of Embodiment]

A mobile communication system according to an embodiment has a radio base station for a specific cell configured to manage a specific cell to which any one of multiple frequencies allocated to a public cell is allocated. The radio base station for a specific cell notifies guidance notification which leads cell reselection from the public cell to the specific cell, by using the remaining frequencies other than the frequency allocated to the specific cell.

In the embodiment, the radio base station for a specific cell notifies the guidance notification which leads cell reselection from the public cell to the specific cell, by using the remaining frequencies other than the frequency allocated to the specific cell. Accordingly, even when a mobile communication terminal uses the public cell to which frequencies different from the frequency allocated to the specific cell are allocated, the mobile communication terminal can be properly guided to the specific cell. Also, there is no need to acquire the location of the mobile communication terminal.

Note that specific cells in the embodiment are preferably cells installed in small and large scales. It is preferable that the specific cells be cells managed by an HNB (Home NodeB) , a HeNB (Home Evolved NodeB) , a femto BTS, and the like. In other words, the radio base station for a specific cell is an HNB, HeNB, femto BTS or the like.

### [First Embodiment]

### (Configuration of Mobile Communication System)

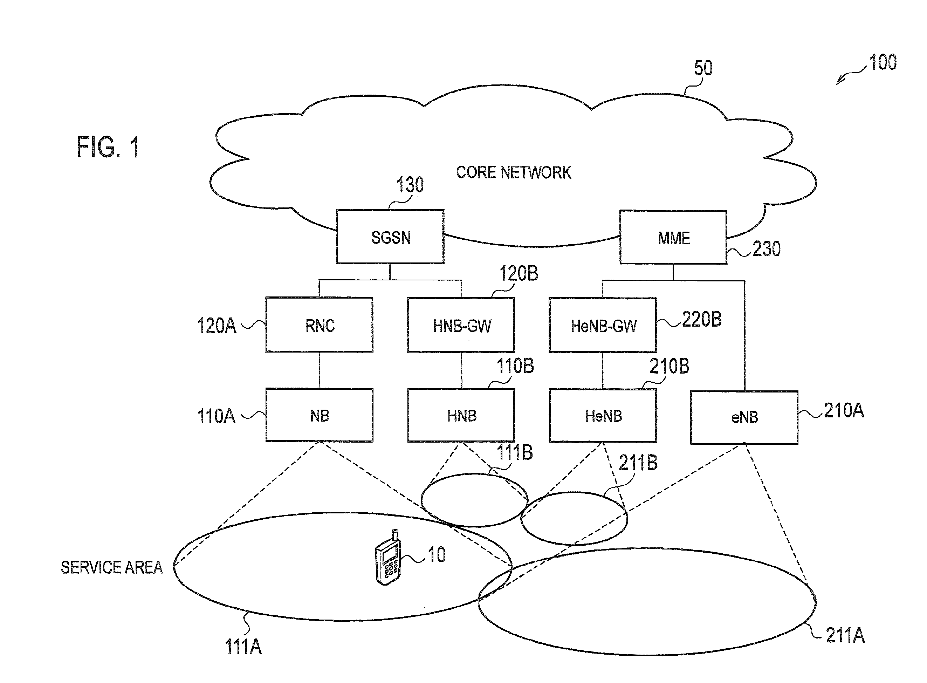

The configuration of a mobile communication system according to a first embodiment is described below by referring to the drawings. Fig. 1 is a drawing showing a mobile communication system 100 according to the first embodiment.

As shown in Fig. 1, the mobile communication system 100 includes a mobile terminal device 10 (hereinafter, UE 10) and a core network 50. In addition, the mobile communication system 100 includes a first communication system and a second communication system.

For example, the first communication system 100 is a communication system supporting UMTS (Universal Mobile Telecommunication System). The first communication system has a base station 110A (hereinafter NB 110A), a home base station 110B (hereinafter HNB 110B), a RNC 120A, a home base station gateway 120B (hereinafter, HNB-GW 120B), and an SGSN 130.

Note that a radio access network (UTRAN; Universal Terrestrial Radio Access Network) supporting the first communication system includes the NB 110A, HNB 110B, RNC 120A, and HNB-GW 120B.

For example, the second communication system is a communication system supporting LTE (Long Term Evolution). The second communication system has, for example, a base station 210A (hereinafter eNB 210A), a home base station 210B (hereinafter HeNB 210B), a home base station gateway 220B (hereinafter, HeNB-GW 220B), and an MME 230.

Note that a radio access network (E-UTRAN; Evolved Universal Terrestrial Radio Access Network) supporting the second communication system includes the eNB 210A, HeNB 210B, and HeNB-GW 220B.

The UE 10 is a device (User Equipment) configured to communicate with the first communication system or the second communication system. For example, the UE 10 has a function to perform radio communications with the NB 110A and the HNB 110B. Or, the UE 10 has a function to perform radio communications with the eNB 210A and the HeNB 210B.

The NB 110A is a device (NodeB) configured to manage a public cell 111A and perform radio communications with the UE 10 present in the public cell 111A.

The HNB 110B is a device (Home NodeB) configured to manage a specific cell 111B and perform radio communications with the UE 10 present in the specific cell 111B.

The RNC 120A is a device (Radio Network Controller) connected with the NB 110A and configured to establish a radio connection (RRC Connection) with the UE 10 present in the public cell 111A.

The HNB-GW 120B is a device (Home NodeB Gateway) connected with the HNB 110B and configured to establish a radio connection (RRC Connection) with the UE 10 present in the specific cell 111B.

The SGSN 130 is a device (Serving GPRS Support Node) configured to exchange packets in a packet exchange domain. The SGSN 130 is provided in the core network 50. Although omitted in Fig. 1, a device (MSC; Mobile Switching Center) to perform line switching in a line switching domain may be provided in the core network 50.

The eNB 210A is a device (evolved NodeB) configured to manage a public cell 211A and perform radio communications with the UE 10 present in the public cell 211A.

The HeNB 210B is a device (Home evolved NodeB) configured to manage a specific cell 211B and perform radio communications with the UE 10 present in the specific cell 211B.

The HeNB-GW 220B is a device (Home evolved NodeB Gateway) connected with the HeNB 210B and configured to manage the HeNB 210B.

The MME 230 is a device (Mobility Management Entity) connected with the eNB 210A and configured to manage mobility of the UE 10 establishing the radio connection with the HeNB 210B. Also, the MME 230 is a device connected with the HeNB 210B via the HeNB-GW 220B and configured to manage the mobility of the UE 10 establishing the radio connection with the HeNB 210B.

Note that the public cell and the specific cell should be understood as functions to perform radio communications with the UE 10. However, the public cell and the specific cell are also used as terms to express service areas of cells. Also, a cell such as the public cell or the specific cell is identified by a frequency, diffusion code, or time slot, which is used in a cell.

The specific cell is sometimes referred to as a femtocell, CSG (Closed Subscriber Group), or a home cell. Also, the specific cell is configured to be settable with an access type for defining UEs 10 allowed to access the specific cell. The access type is "Closed," "Hybrid," or "Open."

The "Closed" specific cell is configured to permit only a specific user (UE; User Equipment) managed by the specific cell to receive provision of services.

The "Hybrid" specific cell is configured to permit a specific user managed by the specific cell to perform communications with a high quality and is configured to permit a non-specific user not managed by the specific cell to perform a communication with a best effort quality.

The "Open" specific cell is configured to permit all the UEs 10 to receive provision of services, as is the case with the public cell. Here, in the "Open" cell, UEs 10 can perform communications with equal quality without being distinguished as to whether the UEs 10 are managed by the specific cell.

Note that the access type may be an "ACCESS CLASS BARRED" to prohibit an access of the UE 10 by each access class, or a "CELL BARRED" to prohibit an access of the UE 10 by each cell.

### (Configuration of Radio Base Station for Specific Cell)

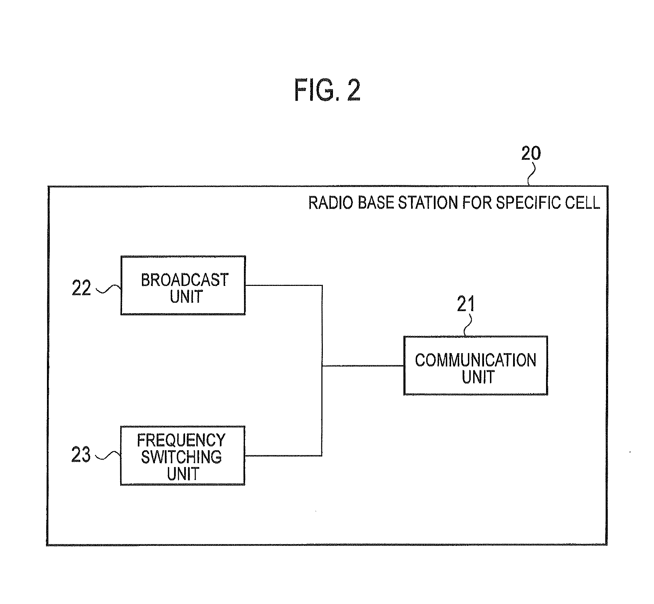

The configuration of the radio base station for a specific cell according to the first embodiment is described below by referring to the drawings. Fig. 2 is a drawing showing a radio base station 20 for a specific cell according to the first embodiment. As shown in Fig. 2, the radio base station 20 for a specific cell has a communication unit 21, a notification unit 22, and a frequency switching unit 23.

Note that the radio base station 20 for a specific cell is a radio base station which manages a specific cell and is an HNB 110B or HeNB 210B. Also, any one of multiple frequencies allocated to a public cell is allocated to the specific cell.

The communication unit 21 performs communications with the UE 10. Also, the communication unit 21 performs communications with other network apparatus (e.g., HNB-GW 120B, HeNB-GW 220B).

For example, in the specific cell, the communication unit 21 notifies guidance notification which leads cell reselection from the public cell to the specific cell, by using the remaining frequencies other than the frequency allocated to the specific cell.

Also, the communication unit 21 forms a service area of the specific cell by notifying shared control information. The shared control communication is, for example, system information, and is used when a UE 10 performs location registration in the specific cell.

The notification unit 22 instructs the communication unit 21 to notify the guidance notification which leads cell reselection from the public cell to the specific cell. Here, the guidance notification is notified using the remaining frequencies other than the frequency allocated to the specific cell among the frequencies allocated to the public cell. Also, the possible guidance notification includes, for example, the following two types.

Specifically, first type guidance notification contains information for specifying a frequency allocated to the specific cell. Second type guidance notification contains information for restricting usage of the frequency used for notifying the guidance notification.

Here, the UE 10 receiving the first type guidance notification shifts to the frequency allocated to the specific cell by using the information contained in the guidance notification. After that, the UE 10 performs location registration in the specific cell.

On the other hand, the UE 10 receiving the second type guidance notification shifts to a frequency different from the frequency used for notifying the guidance notification. The UE 10 repeats the frequency shift and finally shifts to the frequency allocated to the specific cell. After that, the UE 10 performs location registration in the specific cell.

The frequency switching unit 23 switches the remaining frequencies other than the frequency allocated to the specific cell among the frequencies allocated to the public cell in a time division manner. The above-described notification unit 22 makes an instruction to notify the guidance notification by using each of the remaining frequencies in the time division manner.

### (Summary of Guidance Method)

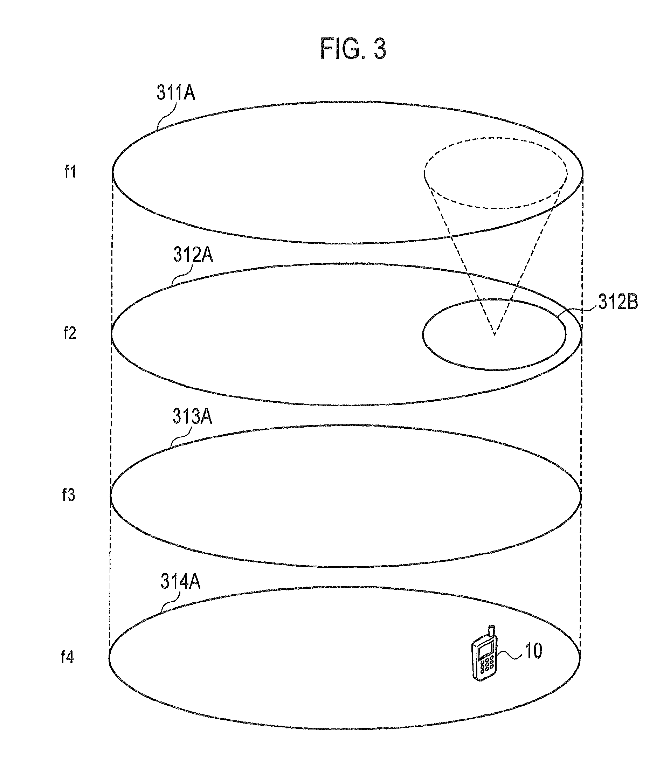

A method of guidance from a public cell to a specific cell according to the first embodiment is described below by referring to the drawings. Figs. 3 to 9 are drawings, each illustrating a method of guidance from a public cell to a specific cell according to the first embodiment.

Here, as shown in Figs. 3 to 9, a case where four frequencies (f1 to f4) are allocated to a public cell is illustrated as an example. Specifically, a frequency f1 to a frequency f4 are respectively allocated to a public cell 311A, a public cell 312A, a public cell 313A, and a public cell 314A. Also, a frequency f2 is allocated to a specific cell 312B.

Note that, the radio base station 20 for a specific cell (hereinafter, a specific cell 312B) switches the frequencies used for notifying guidance notification in the order of the frequency f1, the frequency f3, and the frequency f4 excepting the frequency f2 allocated to the specific cell.

It should be noted that in Fig. 3, public cells are referred to as a public cell 311A to a public cell 314A without having the public cell 111A and the public cell 211A distinguished from each other. Similarly, it should be noted that specific cells are generally referred to as a specific cell 312B without having the specific cell 111B and the specific cell 211B distinguished from each other.

### (First Guidance Method)

Firstly, a method of guiding a UE 10 visiting the public cell 314A to the specific cell 312B with the first type guidance notification is described by referring to Fig. 3 to Fig. 6. Note that, as described above, the first type guidance notification contains information specifying the frequency allocated to the specific cell.

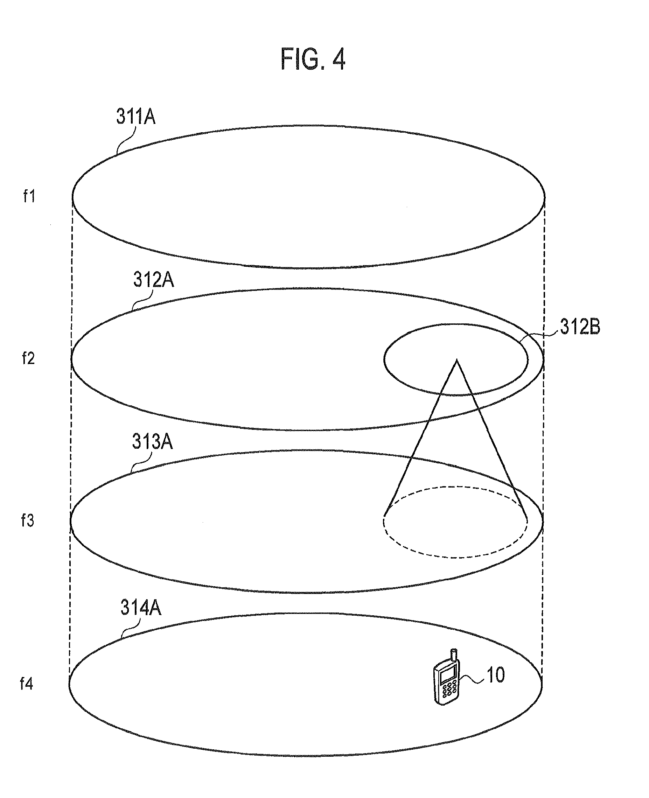

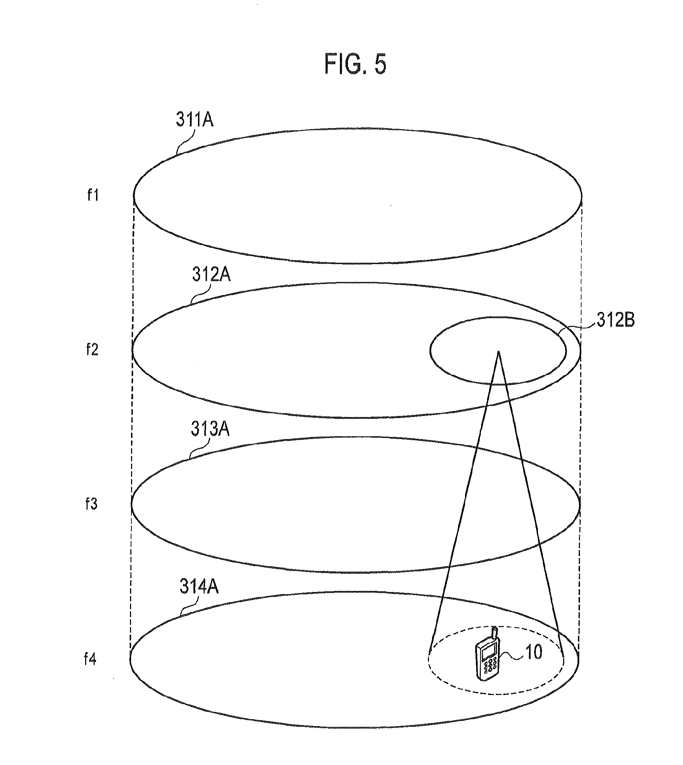

Specifically, as shown in Fig. 3, the specific cell 312B notifies the guidance notification using the frequency f1. Subsequently, as shown in Fig. 4, the specific cell 312B notifies the guidance notification using the frequency f3. Subsequently, as shown in Fig. 5, the specific cell 312B notifies the guidance notification using the frequency f4.

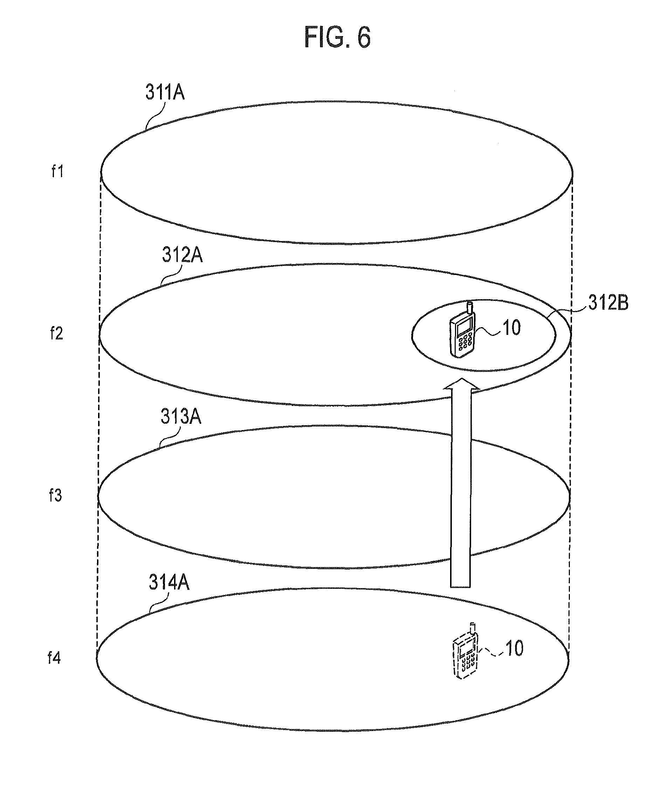

In this manner, the UE 10 visiting the public cell 314A can detect the guidance notification notified from the specific cell 312B. Accordingly, as shown in Fig. 6, the UE 10 shifts from the frequency f4 to the frequency f2 using the information contained in the guidance notification. Subsequently, the UE 10 performs location registration in the specific cell 312B. Thus, the UE 10 switches the cell for the location registration of the UE 10 from the public cell 314A to the specific cell 312B.

### (Second Guidance Method)

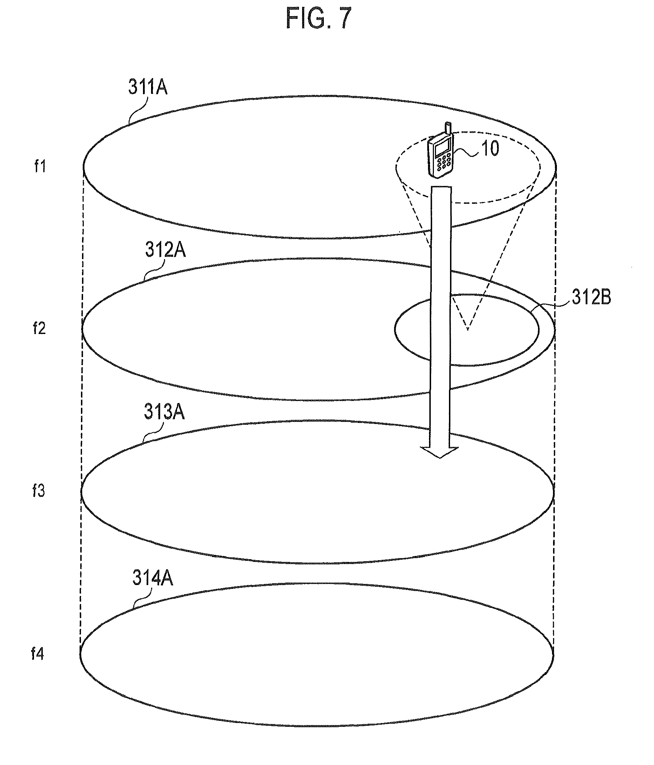

Secondly, a method of guiding a UE 10 visiting the public cell 311A to the specific cell 312B with the second type guidance notification is described by referring to Fig. 7 to Fig. 9. Note that, the second type guidance notification contains information restricting usage of the frequency used for notifying the guidance notification.

Specifically, as shown in Fig. 7, the specific cell 312B notifies the guidance notification using the frequency f1. The UE 10 visiting the public cell 311A detects the guidance notification and shifts to another frequency (here, the frequency f3).

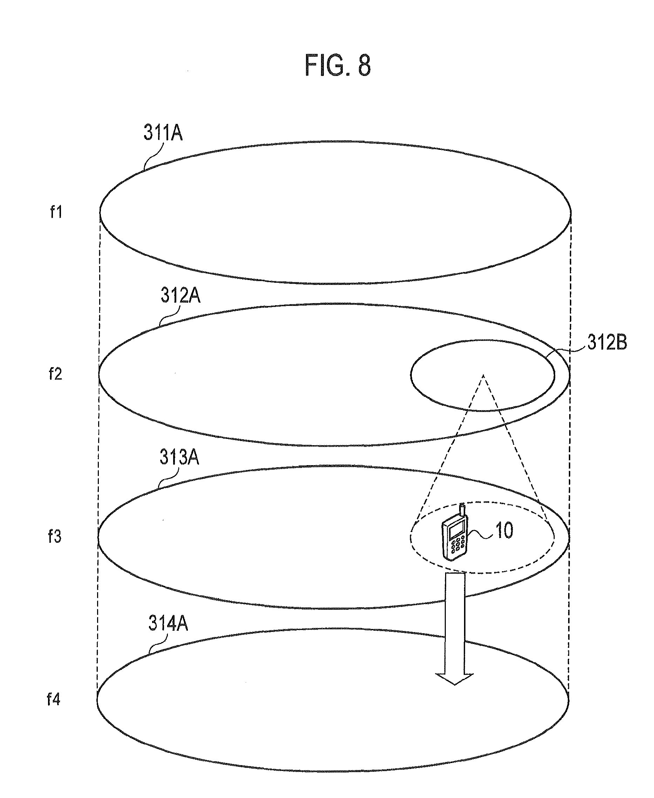

Subsequently, as shown in Fig. 8, the specific cell 312B notifies the guidance notification using the frequency f3. The UE 10 visiting the public cell 313A detects the guidance notification and shifts to another frequency (here, the frequency f4).

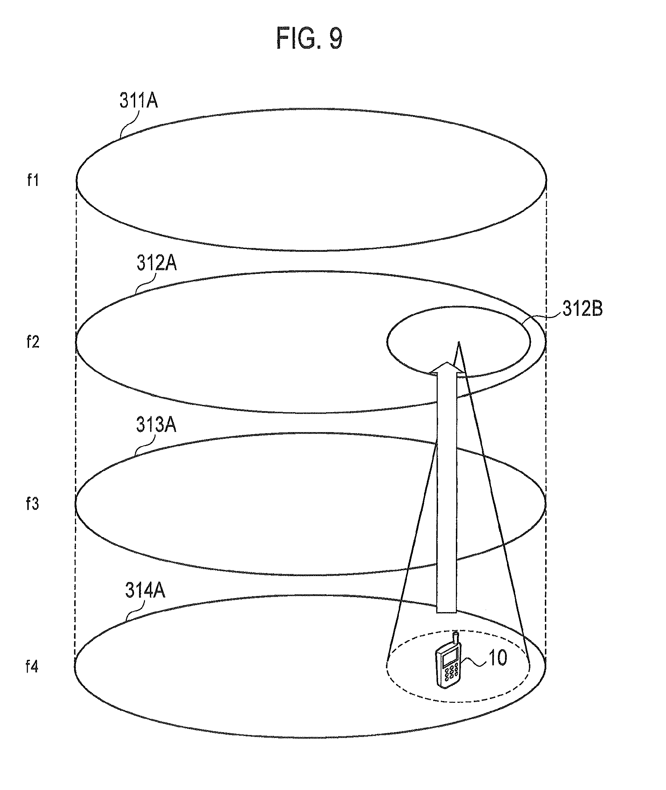

Subsequently, as shown in Fig. 9, the specific cell 312B notifies the guidance notification using the frequency f4. The UE 10 visiting the public cell 314A detects the guidance notification and shifts to another frequency (here, the frequency f2). Subsequently, the UE 10 performs location registration in the specific cell 312B. Thus, the UE 10 switches the cell for the location registration of the UE 10 from the public cell 314A to the specific cell 312B.

Here, it is preferable that the UE 10 be configured to hold the frequency, whose usage is restricted by the guidance notification, over a certain period of time. It is also preferable that the UE 10 be configured to avoid shifting to the frequency held over the certain period of time.

As described above, the guidance notification is notified using the remaining frequencies other than the frequency allocated to the specific cell. Thus, upon completion of one cycle of the switching of the frequencies used for notifying the guidance notification, the UE 10 shifts to the frequency allocated to the specific cell.

Note that it is preferable that the certain period of time for holding the frequency whose usage is restricted by the guidance notification be longer than a period of one cycle of the switching of the frequencies used for notifying the guidance notification. One cycle of the switching of the frequencies means that all the frequencies allocated to the public cell are used once except for the frequency allocated to the specific cell. For example, in the above-described example, the frequency f1, the frequency f3, and the frequency f4 are switched one after another as one circle of the switching of the frequencies.

### (Advantageous Effects)

In the embodiment, the radio base station 20 for a specific cell notifies guidance notification which leads cell reselection from a public cell to a specific cell by using the remaining frequencies other than the frequency allocated to the specific cell. Accordingly, even when a UE 10 uses a public cell to which frequencies different from the frequency allocated to the specific cell are allocated, the mobile communication terminal can be properly guided to the specific cell. Also, there is no need to acquire the location of the mobile communication terminal.

### [Modification 1]

Modification 1 of the first embodiment is described below by referring to the drawings. In the following description, portions different from those of the first embodiment are mainly described.

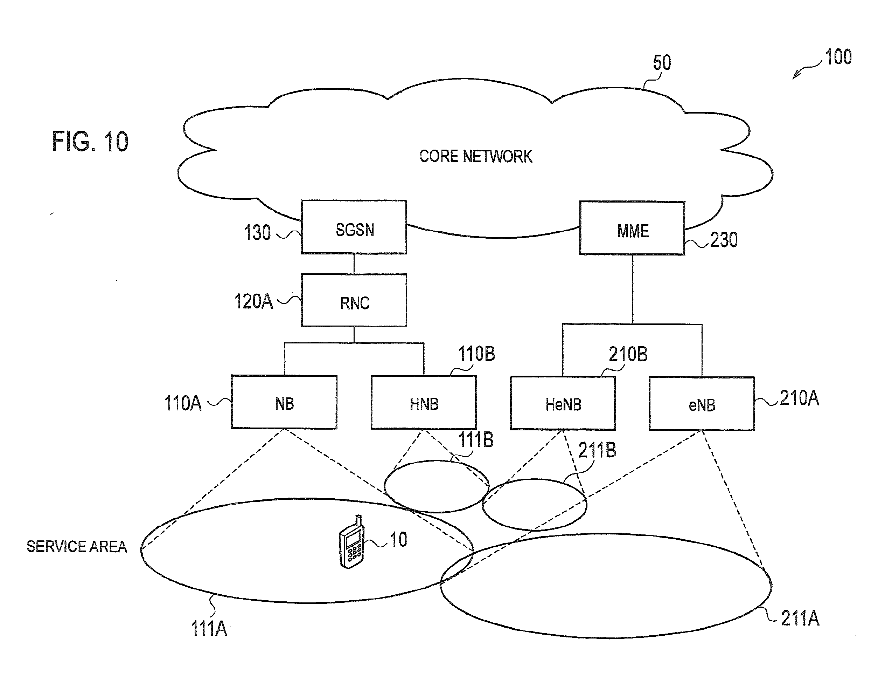

Specifically, in the first embodiment, an upper node of the HNB 110B is the HNB-GW120B. On the other hand, in Modification 1, as shown in Fig. 10, an upper node of an HNB 110B is a RNC 120A.

In Modification 1, the RNC 120A manages the HNB 110B in place of an HNB-GW 120B. In other words, the RNC 120A provides functions similar to those of the HNB-GW 120B to devices residing under the control of the RNC 120A.

In addition, in the first embodiment, an upper node of the HeNB 210B is an HeNB-GW 220B. On the other hand, in Modification 1, as shown in Fig. 10, an upper node of the HeNB 210B is an MME 230.

In Modification 1, the HeNB 210B provides functions similar to those of the HeNB-GW 220B to devices residing under the control of the HeNB 210B in place of the HeNB-GW 220B.

Note that only the HBN-GB 120B may be omitted or only the HeNB-GW 220B may be omitted.

### [Other Embodiments]

The present invention has been described by using the above-described embodiments. However, it should not be understood that the description and the drawings, which constitute one part of this disclosure, are to limit the present invention. Various alternative embodiments, examples, and operational techniques will be obvious for those who are in the art from this disclosure.

Note that an operation of the above-described radio base station 20 for a specific cell may be implemented by hardware or may be implemented by a software module to be executed by a processor, or may be implemented in combination of the both.

The software module may be provided in any form of a recording medium such as a RAM (Random Access Memory), a flash memory, a ROM (Read Only Memory), an EPROM (Erasable Programmable ROM), an EEPROM (Electronically Erasable and Programmable ROM), a register, a hard disk drive, a removable disk, or a CD-ROM.

Such recording medium is connected with the processor so that the processor can read and write information on the recording medium. Also, such recording medium may be integrated on the processor. Or, such recording medium and processor may be provided inside ASIC. Such ASIC may be provided inside the radio base station 20 for a specific cell. Or, such recording medium and processor may be provided inside the radio base station 20 for a specific cell as a discrete component.

Note that the contents of Japanese Patent Application Publication No. 2010-009534 (filed on January 19, 2010) are hereby incorporated by reference in their entirety.

### INDUSTRIAL APPLICABILITY

The present invention can provide a mobile communication system, a radio base station for a specific cell, and a mobile communication method, which are capable of guiding a radio communication terminal from a public cell to a specific cell properly without acquiring the location of the mobile communication terminal. Thus, the present invention is useful in a radio communication and the like.

### EXPLANATION OF THE REFERENCE NUMERALS

10... communication terminal device, 20... radio base station for a specific cell, 21... communication unit, 22... notification unit, 23... frequency switching unit, 50... core network, 100... mobile communication system, 110A... NB, 110B... HNB, 111A... public cell, 111B... specific cell, 120A... RNC, 120B... HNB-GW, 130... SGSN, 210A...eNB, 210B... HeNB, 211A... public cell, 211B... specific cell, 2208... HeNB-GW, 230... MME, 311A to 314A... public cell, 312B... specific cell

## Claims

1. A mobile communication system comprising a radio base station for a specific cell configured to manage a specific cell to which any one of a plurality of frequencies allocated to a public cell is allocated, wherein
the radio base station for a specific cell notifies guidance notification leading cell reselection from the public cell to the specific cell by using the remaining frequencies other than the frequency allocated to the specific cell.

2. The mobile communication system according to claim 1, wherein the radio base station for a specific cell switches the remaining frequencies in a time division manner to notify the guidance notification by using each of the remaining frequencies in the time division manner.

3. The mobile communication system according to claim 1, wherein the guidance notification contains information specifying the frequency allocated to the specific cell.

4. The mobile communication system according to claim 1, wherein the guidance notification contains information restricting usage of a frequency used for notifying the guidance notification.

5. A radio base station for a specific cell configured to manage a specific cell to which any one of a plurality of frequencies allocated to a public cell is allocated, the radio base station comprising:
a notification unit configured to notify guidance notification leading cell reselection from the public cell to the specific cell by using the remaining frequencies other than the frequency allocated to the specific cell.

6. A mobile communication method applied to a mobile communication system having a radio base station for a specific cell configured to manage a specific cell to which any one of a plurality of frequencies allocated to a public cell is allocated, the mobile communication method comprising the step of:
notifying guidance notification by the radio base station for a specific cell, the guidance notification leading cell reselection from the public cell to the specific cell by using the remaining frequencies other than the frequency allocated to the specific cell.
